Europäisches Patentamt

European Patent Office

Office européen des brevets

(19)

(11) Numéro de publication: **0 035 227**
**B1**

(12) # FASCICULE DE BREVET EUROPEEN

(45) Date de publication du fascicule du brevet:
**01.08.84**

(51) Int. Cl.³: **H 04 N 7/10**

(21) Numéro de dépôt: **81101348.1**

(22) Date de dépôt: **25.02.81**

(54) Station centrale de réception pour un réseau de télévision par câbles.

(30) Priorité: **04.03.80 FR 8004801**

(43) Date de publication de la demande:
**09.09.81 Bulletin 81/36**

(45) Mention de la délivrance du brevet:
**01.08.84 Bulletin 84/31**

(84) Etats contractants désignés:
**BE CH DE FR GB IT LI NL**

(56) Documents cités:
**DE - A - 2 424 521**
**DE - A - 2 758 951**

**RADIO MENTOR ELECTRONIC, vol. 32, no. 5, mai 1966, Munich, DE H. LICHT: "Gemeinschaftsantennenanlagen mit automatischer Pegelregelung", pages 400-403**

(73) Titulaire: **VISIODIS, Société Anonyme dite, 13, rue de la Nouvelle France, F-93300 Aubervilliers (FR)**

(72) Inventeur: **Lecomte, Jacques, 15, rue Fournier, F-92110 Clichy (FR)**
Inventeur: **Giboury, Michel, 19, Allée de l'Arlequin, F-92000 Nanterre (FR)**

(74) Mandataire: **Weinmiller, Jürgen et al, Zeppelinstrasse 63, D-8000 München 80 (DE)**

EP 0 035 227 B1

## Description

La présente invention concerne une station centrale de réception pour un réseau de télévision par câbles et notamment une station centrale dont le rôle est de recevoir au moyen d'une antenne collective des signaux par voie hertzienne et de les retransmettre, une fois convenablement traités, vers un certain nombre d'usagers par des câbles.

On sait qu'une station centrale est constituée d'amplificateurs dont le nombre est le même que celui des canaux de télévision utilisés, chacun des amplificateurs comprenant des filtres et des amplificateurs proprement dits dont l'un est à gain variable et est commandé par un circuit de commande automatique de gain (CAG) afin de réguler automatiquement le niveau de sortie de la station pour s'affranchir des variations du niveau d'entrée. Dans les dispositifs classiques, le circuit (CAG) est particulier pour chaque amplificateur et est constitué d'un mélangeur recevant le signal de l'amplificateur et celui d'un oscillateur local et délivrant un signal hétérodyne d'une fréquence intermédiaire plus basse afin de pouvoir éliminer plus facilement au moyen d'un filtre la fréquence porteuse intermédiaire correspondante au signal son. Le signal image est alors détecté puis le niveau du top de synchronisation est extrait de chacun des amplificateurs et des platines (CAG) qui sont associées à chacun des amplificateurs pour être commutés cycliquement au moyen de commutateurs temporels vers un comparateur unique afin de le comparer à un signal de référence délivrant un signal de commande de chacun des amplificateurs à gain variable au travers d'un deuxième commutateur cyclique.

Cet état de la technique est décrit dans le document DE-A-2 758 951.

Dans les dispositifs antérieurs il y a donc autant d'organes de contrôle automatique de gain que d'amplificateurs ou de canaux télévision. L'inconvénient de ces dispositifs est qu'ils sont coûteux.

La station centrale de réception selon la présente invention remédie à cet inconvénient. Dans celle-ci en effet il n'existe qu'une platine (CAG) unique comportant un oscillateur local commun et commandant les amplificateurs de canaux télévision différents.

La présente invention a pour objet une station centrale de réception pour un réseau de télévision par câbles comportant une antenne de réception alimentant une pluralité d'amplificateurs à gain variable, dits de canaux, réglés chacun sur un canal de télévision différent, reliés par leurs sorties respectives aux entrées d'un multiplexeur de mélange des canaux et dont les gains respectifs sont automatiquement réglés par l'intermédiaire de signaux, dits d'erreur, individuellement obtenus pour chaque amplificateur de canal par comparaison d'un signal caractéristique de l'amplitude du signal fourni par cet amplificateur avec un même niveau de référence au moyen d'un comparateur, chaque signal d'erreur fourni sous forme d'une tension étant sélectivement appliqué à un circuit de mémorisation de tension individuellement associé à un amplificateur de canal sur la commande de gain duquel il est chargé d'agir.

Selon l'invention, la station centrale est dotée d'une platine de commande, commune à tous les amplificateurs de canaux, cette platine comporte essentiellement un mélangeur relié d'une part en sortie du multiplexeur et d'autre part en sortie d'un oscillateur local, interne à la platine, réglable en fréquence cycliquement et par pas sous le contrôle d'une horloge interne assurant une sélection d'amplificateur de canal pour réglage, le signal du mélangeur étant appliqué à un extracteur de niveau d'amplitude d'impulsion de synchronisation vidéo, via un détecteur d'enveloppe, de manière à obtenir le signal caractéristique d'amplitude fourni au comparateur produisant chaque signal d'erreur.

Selon une particularité d'une réalisation préférée de l'invention, l'oscillateur local réglable est commandé en tension par l'intermédiaire d'une boucle comportant un circuit de verrouillage de phase fournissant une tension de réglage continue qui est proportionnelle à l'écart existant entre une fréquence, fixée par un quartz, reçue à une entrée dudit circuit de verrouillage et la fréquence du signal fourni à une autre entrée dudit circuit par un diviseur programmable alimenté par le signal de sortie dudit oscillateur local.

Selon une autre caractéristique de cette réalisation préférée, chaque amplificateur de canal est compris dans une platine dite d'amplificateur de canal et le diviseur programmable est relié par des entrées à une pluralité de commutateurs de sélection de canaux répartis sur les platines d'amplificateurs de canaux de manière à permettre les choix mutuellement exclusifs d'un programme de division à partir de chaque platine d'amplificateur en fonction du canal traité par l'amplificateur de cette platine, les commutateurs des platines d'amplificateurs étant temporairement activés platine par platine sous le contrôle de l'horloge interne de la platine de commande.

En se référant aux figures schématiques 1 à 3 ci-jointes on va décrire ci-après un exemple de mise en œuvre de l'invention, exemple donné à titre purement illustratif et nullement limitatif. Les mêmes éléments représentés sur plusieurs de ces figures portent sur toutes celles-ci les mêmes références.

La figure 1 représente un schéma-bloc de la station centrale selon la présente invention.

La figure 2 représente un schéma-bloc de la platine de commande automatique de gain contenue dans la station selon la figure 1.

La figure 3 représente un schéma-bloc de l'un des amplificateurs de canal à gain variable contenus dans la station selon la figure 1.

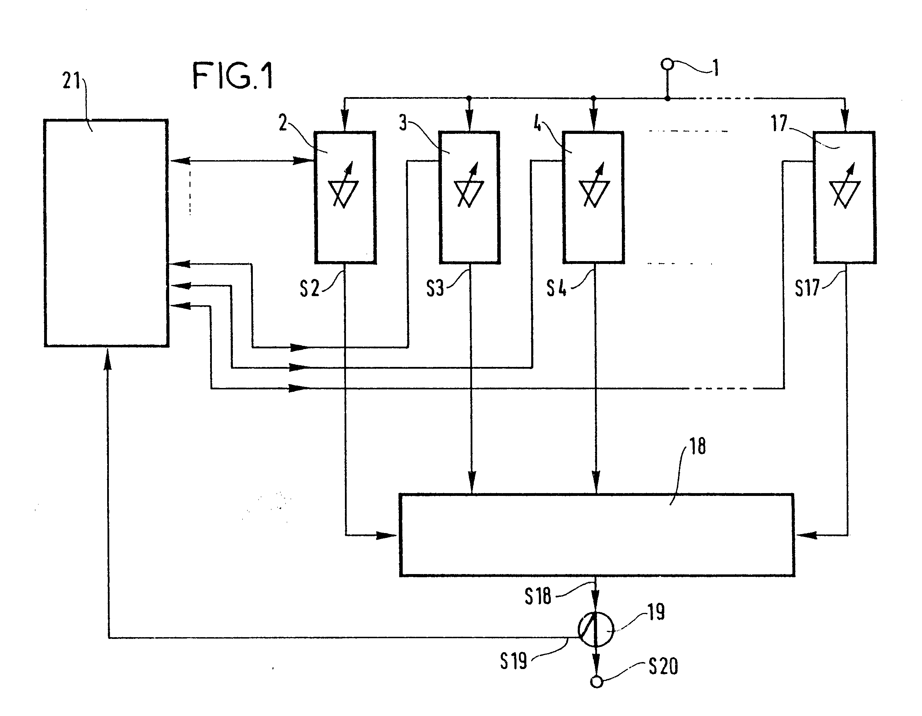

Sur la figure 1 on voit une antenne collective de réception 1 alimentant par exemple seize amplificateurs 2 à 17 à gain variable réglés chacun sur un canal de télévision différent. Les signaux de sortie S2 à S17 des amplificateurs 2 à 17 sont mélangés dans un multiplexeur 18 dont le but est de superposer tous les canaux vers une sortie unique S18 reliée à un coupleur directif 19 permettant de prélever une faible partie S19 des signaux et d'envoyer la grande partie S20 vers les usagers. La faible partie S19 des signaux est envoyée à une platine de commande automatique de gain (CAG) 21 unique envoyant ou recevant des signaux vers ou venant des amplificateurs 2 à 17.

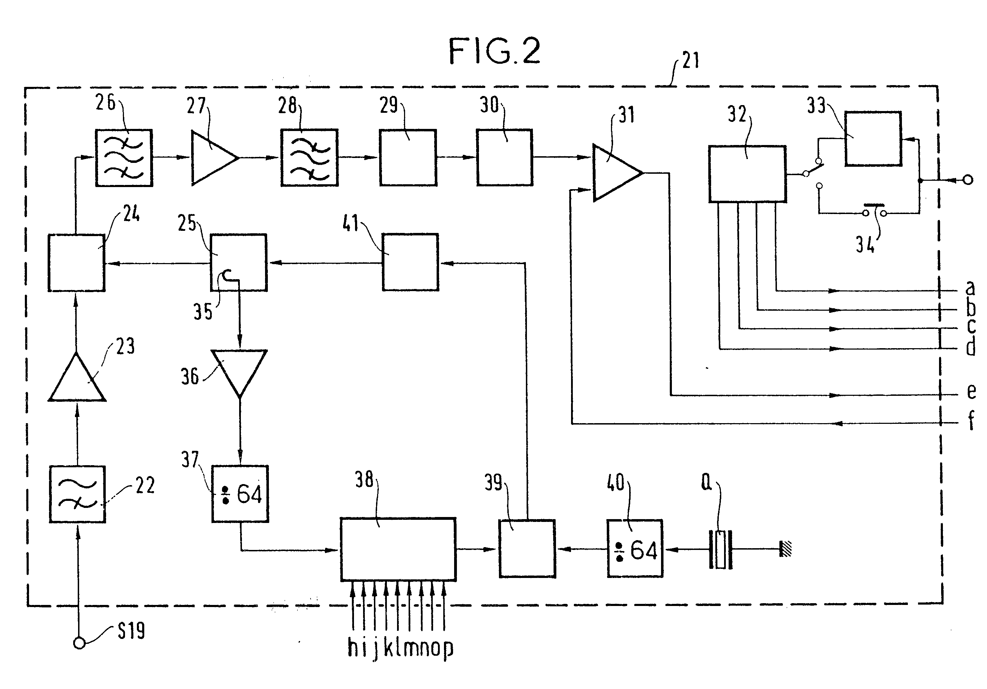

Sur la figure 2 représentant le platine CAG 21 on voit les signaux S19 envoyés sur un filtre passe-haut 22 ayant une fréquence de coupure à 400 MHz par exemple et dont les signaux sortants sont amplifiés par un amplificateur 23. Les signaux amplifiés sont envoyés vers un mélangeur 24 à diodes, qui assure une détection hétérodyne par mélange avec la fréquence d'un oscillateur local 25 de l'espèce oscillateur commandé par tension, tel qu'une diode à capacité variable. L'oscillateur local 25 peut être réglé à une fréquence de 434 MHz + 8 n (n compris entre 1 et 44). La fréquence intermédiaire provenant du mélangeur est filtrée par un filtre passe-bande 26 centré sur 40 MHz et laissant passer la fréquence intermédiaire de la porteuse son et image. Les signaux provenant du filtre passe-bande 26 sont ensuite amplifiés dans un amplificateur 27 puis filtrés dans un filtre passe-bande 28 à onde de surface centré sur 37,25 MHz de façon à éliminer la fréquence intermédiaire de la porteuse son (39,2 MHz). Un détecteur 29 détecte l'enveloppe du signal résultant et un extracteur 30 du niveau de l'impulsion de synchronisation permet d'évaluer l'amplitude du signal vidéo. Le signal en provenance de l'extracteur 30 est envoyé sur une entrée d'un comparateur 31 dont l'autre entrée reçoit un signal f qui est le niveau de référence de la tension de CAG et qui provient des platines amplificateurs 2 à 17 comme il sera décrit plus loin. Le comparateur 31 fournit sur sa sortie une tension d'erreur e qui est la tension CAG envoyée vers chacune des platines amplificateurs 2 à 17.

La platine CAG 21 comporte également un compteur 32 comptant des impulsions en provenance d'un multivibrateur 33 ou bien celle obtenues au moyen d'un interrupteur manuel 34. Le compteur délivre quatre bits d'horloge, a, b, c, d envoyés vers chacune des platines amplificateurs 2 à 17. La platine CAG 21 comporte également un circuit de commande de l'oscillateur local 25. Une boucle 35 prélève le signal de l'oscillateur local 25 pour l'amplifier dans un amplificateur 36. Le signal amplifié dont la fréquence est celle de l'oscillateur local 25 est divisé par 64 dans un diviseur de fréquence 37 et le signal divisé est envoyé sur un diviseur programmable 38 divisant la fréquence par 217 à 393 au pas de 4 sur commande de 9 bits h, i, j, k, l, m, n, o, p en provenance des platines des amplificateurs 2 à 17. Un circuit de verrouillage de phase (PLL) 39 compare les fréquences en provenance du diviseur programmable 38 avec une fréquence de comparaison de 31,25 kHz, par exemple, obtenue en divisant par 64 dans un diviseur 40 la fréquence d'un quartz Q réglé sur 2 MHz. Le circuit PLL fournit une tension continue proportionnelle à l'écart de fréquence entre les deux fréquences.

Cette tension continue est filtrée dans un filtre 41 éliminant la fréquence 31 kHz et envoyée sur l'oscillateur local 25.

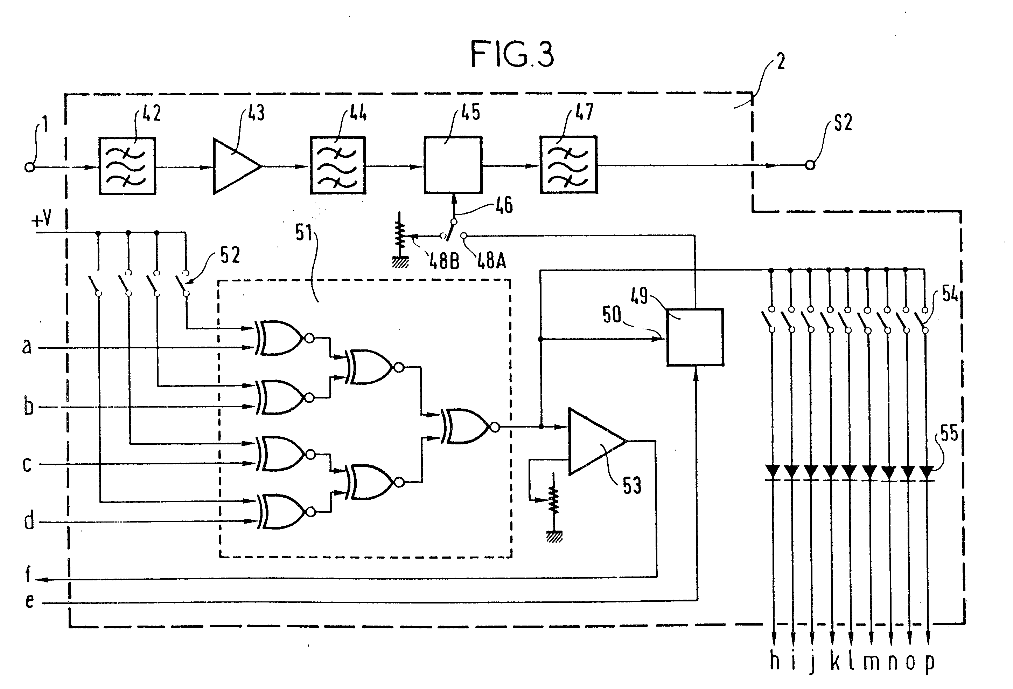

Sur la figure 3 on voit l'entrée de l'antenne 1 communiquant avec un filtre passe-bande 42 laissant passer le canal de télévision particulier de l'amplificateur 2. Le filtre 42 est suivi d'un amplificateur à large bande 43 et puis d'un filtre mono canal 44 et d'un transistor 45 à effet de champ à double porte dont l'une d'elle constitue l'entrée la commande de gain 46 dudit transistor. Un autre filtre passe bande 47 est disposé à la sortie de l'amplificateur 45 dont le rôle est de commander un niveau de sortie constant du signal S2.

L'entrée de commande 46 du gain de l'amplificateur 45 est soit reliée à un potentiomètre 48 B par ajustage manuel, soit à un plot 48A pour l'ajustage automatique. Au cas où la commande 46 est automatique le signal de commande provient d'un circuit 49 de mémorisation de tension réalisé au moyen de condensateurs, et alimenté par la tension de CAG e en provenance du comparateur 31 (figure 2). Le circuit 49 est déclenché par une entrée de commande 50.

Les signaux de l'horloge a, b, c, d en provenance du compteur 32 (figure 2) parviennent dans un circuit logique 51 constitué de portes NON-OU EXCLUSIF en même temps que des états logiques 1 ou 0 obtenus grâce à quatre interrupteurs 52 programmables permettant de réaliser 16 programmes (un programme par canal de télévision).

Lorsqu'il y a corrélation entre le numéro de programme et les états de l'horloge, trois conséquences en résultent. Premièrement l'entrée 50 valide le circuit de mémorisation 49. Deuxièmement l'état logique à la sortie du circuit logique 51 permet d'assurer le niveau de référence de la tension CAG du comparateur 53 dont une entrée est réglée par un potentiomètre à un niveau de référence et dont la sortie assure un niveau de référence CAG, signal f, pour la deuxième entrée du comparateur 31 (figure 2). Troisièmement l'état logique à la sortie du circuit logique 51 sert à valider des commutateurs à microcontacts tels que 54 munis de diodes 55 au nombre de 9 et qu'il est possible de programmer à l'un des 44 canaux de télévision existants. Il en résulte que le diviseur programmable 38 (figure 2) effectue ses divisions en fonction de la position des commutateurs 54 qui n'est validée que lorsque les états de l'horloge a, b, c, d et des programmes réalisés par les interrupteurs 52 sont en corrélation.

Le fonctionnement de la station est le suivant:

A l'instant t l'oscillateur 25 assure le changement de fréquence d'un canal n présent sur la sortie multiplexée S18. La fréquence de l'oscillateur 25 est telle que la fréquence intermédiaire filtrée par le filtre 26 est la différence entre la fréquence du canal n régulé à l'instant t et la fréquence de l'oscillateur 25 à l'instant t. Dans les circuits de fréquence intermédiaire le niveau de l'impulsion de synchronisation du signal vidéo est analysé et par un processus de signalisation un signal est délivré qui commande le gain sur la voie n. Le signal de commande du gain de la voie n est mis en mémoire (circuit 49). A l'instant t + Δ t l'oscillateur local 25 se règle sur une autre fréquence et le processus de signalisation s'effectue alors sur le canal n + 1. Le signal de commande du gain de la voie n + 1 est mis en mémoire. L'analyse, voie par voie s'effectue ainsi jusqu'à ce que tous les canaux à réguler soient passés en revue et au bout d'un certain temps déterminé par le compteur 32, le cycle de securation est recommencé et le contenu des mémoires associées à chaque canal est mis à jour.

Les applications de la station sont du domaine des réseaux de télédistribution assurant la distribution d'un certain nombre de canaux de télévision vers un certain nombre d'usagers.

**Revendications**

1. Station centrale de réception pour un réseau de télévision par câbles comportant une antenne de réception (1) alimentant une pluralité d'amplificateurs à gain variable (2 à 17), dits de canaux, réglés chacun sur un canal de télévision différent, reliés par leurs sorties respectives aux entrées d'un multiplexeur (18) de mélange des canaux et dont les gains respectifs sont automatiquement réglés par l'intermédiaire de signaux (e), dits d'erreur, individuellement obtenus pour chaque amplificateur de canal (2 à 17) par comparaison d'un signal caractéristique prélevé en sortie de cet amplificateur, avec un même niveau de référence, au moyen d'un comparateur (31), chaque signal d'erreur (e) fourni sous forme d'une tension étant sélectivement appliqué à un circuit de mémorisation de tension (49) individuellement associé à un amplificateur de canal sur la commande de gain duquel il est chargé d'agir, ladite station étant caractérisée en ce qu'elle est dotée d'une platine de commande (21), commune à tous les amplificateurs de canaux et qui comporte essentiellement un mélangeur (24) relié d'une part à la sortie (S19) du multiplexeur (18) et d'autre part à celle d'un oscillateur local (25) interne, réglable en fréquence cycliquement et par pas sous le contrôle d'une horloge interne (32, 33) assurant une sélection d'amplificateur de canal pour réglage, le signal du mélangeur (24) étant appliqué à un extracteur (30) de niveau d'amplitude d'impulsion de synchronisation vidéo, via un détecteur d'enveloppe, de manière à obtenir le signal caractéristique d'amplitude fourni au comparateur (31) produisant chaque signal d'erreur.

2. Station centrale selon la revendication 1, caractérisée en ce que l'oscillateur local (35) réglable est commandé en tension par l'intermédiaire d'une boucle comportant un circuit de verrouillage de phase (39) qui fournit une tension de réglage continue proportionnelle à l'écart existant entre une fréquence, fixée par un quartz (Q), reçue à une entrée du circuit de verrouillage et la fréquence du signal fourni à une autre entrée dudit circuit par un diviseur programmable (38) alimenté par le signal de sortie dudit oscillateur local.

3. Station centrale selon la revendication 2, dans lequel chaque amplificateur de canal est compris dans une platine dite d'amplificateur de canal, ladite station centrale étant caractérisée en ce que le diviseur programmable (38) est relié par des entrées à une pluralité de commutateurs (54) de sélection de canaux répartis sur les platines d'amplificateurs de canaux de manière à permettre les choix mutuellement exclusifs d'un programme de division à partir de chaque platine d'amplificateur en fonction du canal traité par l'amplificateur de cette platine, les commutateurs (54) des platines d'amplificateur de canal étant temporairement activés platine par platine sous le contrôle de l'horloge interne (32, 33) de la platine de commande (21).

**Claims**

1. A central receiving station for a cable TV network, comprising a receiving antenna (1) which feeds several so-called variable gain channel amplifiers (2 to 17), these amplifiers being each adjusted to a different TV channel and being connected by their respective outputs to the inputs of a channel mixing multiplexer (18), the gain of each amplifier being adjusted automatically by so-called error signals (e) which are individually obtained for each channel amplifier (2 to 17) by comparing a characterstic signal sampled from the output of said amplifier with a common reference level, by means of a comparator (31), each error signal, delivered as a voltage, being selectively applied to a voltage storing circuit (49) which is individually associated to a channel amplifier, the gain of which should be controlled by said error signal, characterized in that this station is equipped with a control card (21) which is common to all the channel amplifiers and which mainly comprises a mixer (24) connected on the one hand to the output (S19) of the multiplexer (18) and on the other hand to the output of an inner local oscillator (25), the frequency of which can be adjusted cyclically and step-by-step under the control of an internal clock (32, 33) which ensures a selection of a channel amplifier in view of its adjustment, the mixer (24) signal being applied to an extractor circuit (30) which extracts the amplitude level of the TV synchronization pulses, via a detector of the envelope curve, such that the characteristic amplitude signal is obtained which is delivered to the comparator (31) producing each error signal.

2. A central station according to claim 1, characterized in that the adjustable local oscillator (35) is voltage controlled through a loop comprising a phase locking circuit (39) which furnishes a DC adjustment voltage proportional to the difference between a quartz (Q) controlled frequency which is applied to an input of the locking circuit, and the frequency of the signal which is applied to another input of said circuit by a programmable divider (38) fed by the output signal of said local oscillator.

3. A central station according to claim 2, in which each channel amplifier is located on a so-called channel amplifier card, characterized in that the programmable divider (38) is connected via inputs to several channel selection switches (54) distributed on the channel amplifier cards in such a way that the mutually exclusive selections of a division program from each amplifier card are possible as a function of the channel treated by the amplifier of said card, the switches (54) of the channel amplifier cards being temporarily activated card after card under the control of the internal clock (32, 33) of the control card (21).

**Patentansprüche**

1. Zentrale Empfangsstation eines Kabelfernsehnetzes, mit einer Empfangsantenne (1), die eine Vielzahl von Verstärkern mit variablem Verstärkungsgrad (2 bis 17), Kanalverstärker genannt, versorgt, von denen jeder auf einen anderen Fernsehkanal eingestellt ist und die über ihre jeweiligen Ausgänge mit den Eingängen eines Multiplexers (18) zum Mischen der Kanäle verbunden sind und deren jeweilige Verstärkungsgrade automatisch über Signale (e), Fehlersignale genannt, geregelt werden, die individuell für jeden Kanalverstärker (2 bis 17) durch Vergleich eines am Ausgang dieses Verstärkers entnommenen charakteristischen Signals mit einem gemeinsamen Referenzpegel in einem Komparator (31) erhalten werden, wobei jedes Fehlersignal (e), das in Form einer Spannung geliefert wird, selektiv an einen Spannungsspeicherschaltkreis (49) angelegt wird, der zu einem Kanalverstärker individuell gehört, auf dessen Verstärkungsregelung das Fehlersignal einwirken soll, dadurch gekennzeichnet, dass die Station mit einer Steuerkarte (21) ausgestattet ist, die allen Kanalverstärkern gemeinsam ist und im wesentlichen einen Mischer (24) aufweist, der einerseits mit dem Ausgang (S19) des Multiplexers (18) und andererseits mit dem Ausgang eines internen lokalen Oszillators (25) verbunden ist, dessen Frequenz zyklisch und schrittweise unter der Steuerung durch einen internen Taktgeber (32, 33) einstellbar ist, so dass eine Auswahl eines Kanalverstärkers zur Einstellung erfolgt, wobei das Signal des Mischers (24) über einen Hüllkurvendetektor an eine den Amplitudenpegel der Bildsynchronisationsimpulse entnehmende Schaltung (30) angelegt wird, um das charakteristische Amplitudensignal zu erhalten, das dem Komparator (31) geliefert wird, der jedes Fehlersignal herstellt.

2. Zentrale Station nach Anspruch 1, dadurch gekennzeichnet, dass der lokale Oszillator (35) über eine einen Phasenverriegelungsschaltkreis (39) enthaltende Schleife gesteuert wird, die eine Regelgleichspannung liefert, die zum Frequenzabstand zwischen einer quarzstabilisierten (Q) und an einen Eingang des Verriegelungsschaltkreises angelegten Frequenz und der Frequenz des an einen anderen Eingang dieses Schaltkreises von einem programmierbaren Teiler (38) angelegten Signals proportional ist, wobei dieser Teiler das Ausgangssignal des lokalen Oszillators empfängt.

3. Zentrale Station nach Anspruch 2, in der jeder Kanalverstärker auf einer Kanalverstärkerkarte sitzt, dadurch gekennzeichnet, dass der programmierbare Teiler (38) über Eingänge an eine Vielzahl von Kanalauswahlschaltern (54) angeschlossen ist, die auf die Kanalverstärkerkarten verteilt sind, so dass eine sich wechselweise ausschliessende Auswahl eines Teilerprogramms ausgehend von jeder Kanalverstärkerkarte abhängig vom durch den Verstärker dieser Karte bearbeiteten Kanal möglich wird, wobei die Auswahlschalter (54) der Kanalverstärkerkarten kurzzeitig von Karte zu Karte unter Steuerung durch den internen Taktgeber (32, 33) der Steuerkarte (21) aktiviert werden.

FIG.1

0 035 227

FIG.2

# FIG.3

0 035 227

11